# EUROPEAN PATENT APPLICATION

(11) **EP 4 513 618 A1**
(43) Date of publication of application: **26.02.2025**
(21) Application number: 24150008.1
(22) Date of filing: 02.01.2024
(51) Int. Cl.: H01M 10/48, H01M 50/209, H01M 50/213, H01M 50/296

(54) **CCS ASSEMBLY AND BATTERY MODULE**

(30) Priority: 25.08.2023 CN 202322313273 U
(71) Applicant: Eve Energy Co., Ltd., Huizhou, Guangdong 516006 (CN)
(72) Inventor: LAN, Han, Zooe, Huizhou (CN)
(74) Representative: Herrero & Asociados, S.L.

(57) **Abstract**

A CCS assembly and a battery module are provided. The CCS assembly is arranged on a top of a battery group (200). The CCS assembly includes: a plastic bracket (10), defining a through groove (11); a temperature obtaining member (20), received in the through groove (11) and comprising a temperature sensor (22) and an encapsulation member (21) sleeving an outside of the temperature sensor, wherein the temperature sensor is configured to obtain a temperature of the battery group, the encapsulation member has a connecting surface (213) connected to the plastic bracket; a connection portion (30), configured to connect the connecting surface to the plastic bracket and abutting against the temperature obtaining member, wherein the plastic bracket and the connection portion cooperatively prevents the temperature obtaining member from detaching from the plastic bracket in an axial direction of the battery group.

## Description

### TECHNICAL FIELD

The present disclosure relates to the field of batteries, and in particular to a CCS assembly and a battery module.

### BACKGROUND

In a power battery, a battery is electrically connected to a cells contact system (CCS) assembly to allow a battery management system (BMS) to transmit electrical signals. The CCS assembly is mounted on a top of a battery group. The CCS assembly generally includes a plastic bracket, a flexible circuit board (FPC), a temperature obtaining member, an electrical-signal obtaining member, and a connection bar. The temperature obtaining member is configured to collect a temperature of the battery group while in use, and the temperature is transmitted to the BMS through the FPC, such that a usage state of the battery is monitored.

While the temperature obtaining member in the art is being mounted with the plastic bracket, the temperature obtaining member is directly fixed to the plastic bracket by back adhesive. Since the temperature obtaining member has a water-droplet shape, an outer surface of the temperature obtaining member is curved, a contact area between the temperature obtaining member and the plastic bracket is small. In this case, the temperature obtaining member may be easily detached from the plastic bracket.

### SUMMARY OF THE DISCLOSURE

The present disclosure provides a cells contact system (CCS) assembly and a battery module.

In a first aspect, the present disclosure provides a cells contact system (CCS) assembly, arranged on a top of a battery group. The CCS assembly includes: a plastic bracket, defining a through groove; a temperature obtaining member, received in the through groove and comprising a temperature sensor and an encapsulation member sleeving an outside of the temperature sensor, wherein the temperature sensor is configured to obtain a temperature of the battery group, the encapsulation member has a connecting surface connected to the plastic bracket; a connection portion, configured to connect the connecting surface to the plastic bracket and abutting against the temperature obtaining member, wherein the plastic bracket and the connection portion cooperatively prevents the temperature obtaining member from detaching from the plastic bracket in an axial direction of the battery group.

In some embodiments, a pressing block is arranged on at least one side groove wall of the through groove, a protrusion is arranged on at least one side wall of the encapsulation member, the protrusion has the connecting surface, the protrusion is disposed below the pressing block along the axial direction of the battery group, the connection portion connects the protrusion to the pressing block.

In some embodiments, the at least one side groove wall of the through groove comprises two side groove walls, the pressing block is arranged on one of the two side groove walls, a guide is arranged on the other one of the two side groove walls; the at least one side wall of the encapsulation member comprises two side walls, the protrusion is arranged on one of the two side walls, a slide groove is defined in the other one of the two side walls; the guide is slidably connected with the slide groove.

In some embodiments, a side of the guide facing towards an inlet of the through groove has a notch, a length of the guide is less than a length of the slide groove.

In some embodiments, a length of the pressing block is less than a length of the protrusion along a direction of the temperature obtaining member being mounted.

In some embodiments, the pressing block is disposed at a middle of the through groove along the direction of the temperature obtaining member being mounted.

In some embodiments, a bottom wall of the protrusion and a bottom wall of the encapsulation member are co-planar.

In some embodiments, each of two opposite side walls of the encapsulation member is spaced apart from a corresponding groove wall of the through groove.

In some embodiments, the connection portion comprises a compressible layer and two adhesive layers respectively disposed on two opposite sides of the compressible layer. One of the two adhesive layers is connected to the connecting surface, and the other one of the two adhesive layers is connected to the plastic bracket.

In a second aspect, the present disclosure provides a battery module, including: a battery group, and the cells contact system (CCS) assembly as described in the above. The CCS assembly is arranged on a top of the battery group.

### BRIEF DESCRIPTION OF THE DRAWINGS

FIG. 1 is a structural schematic view of a cells contact system (CCS) assembly according to an embodiment of the present disclosure.
FIG. 2 is a structural schematic view of the temperature obtaining member shown in FIG. 1 being partially mounted in the plastic bracket.
FIG. 3 is an exploded view of the temperature obtaining member shown in FIG. 1.
FIG. 4 is a structural schematic view of the cells contact system (CCS) assembly according to another embodiment of the present disclosure.
FIG. 5 is a structural schematic view of the temperature obtaining member shown in FIG. 4 being mounted in the plastic bracket.
FIG. 6 is an exploded view of the temperature obtaining member and the connection portion shown in FIG. 4.
FIG. 7 is a structural schematic view of the connection portion according to an embodiment of the present disclosure.

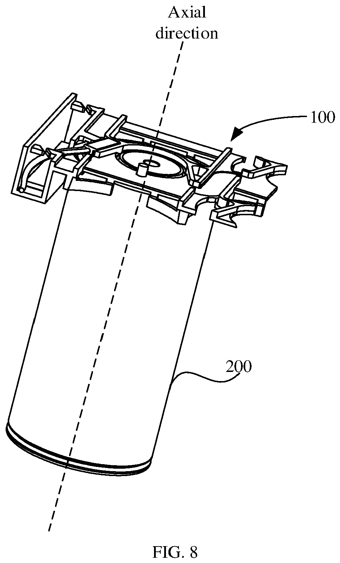

FIG. 8 is a structural schematic view of a battery module having the CCS assembly according to an embodiment of the present disclosure.

### Reference numerals in the drawings:

100-CCS assembly, 10-plastic bracket, 11-through groove, 12-guide, 13-notch, 14-pressing block, 15-gap, 20-temperature obtaining member, 21-encapsulation member, 211-slide groove, 212-protrusion, 213-connecting surface, 22-temperature sensor, 23-wire harness, 30-connection portion, 31-compressible layer, 32-adhesive layer.

### DETAILED DESCRIPTION

For better understanding and implementation, technical solutions in embodiments of the present disclosure will be clearly and completely described below by referring to the accompanying drawings.

In the present disclosure, it is to be noted that terms "up", "down", "front", "rear", "left", "right", "vertical", "horizontal", "top", "bottom", "in", "out", and so on, indicate an orientation or a positional relationship based on the accompanying drawings. The terms are used only for the purpose of facilitating and simplifying description of the present disclosure, but are not to indicate or imply that a device or an element must have a specific orientation or constructed and operated in a specific orientation. Therefore, the terms shall not be interpreted as limiting the present disclosure.

Unless otherwise defined, all technical and scientific terms used herein have the same meaning as commonly understood by any ordinary skilled person in the art. The terms used herein in the specification of the present disclosure are for the purpose of describing specific embodiments and are not to limit the present disclosure.

The present disclosure will be described in further detail below by referring to the accompanying drawings.

### Embodiment 1

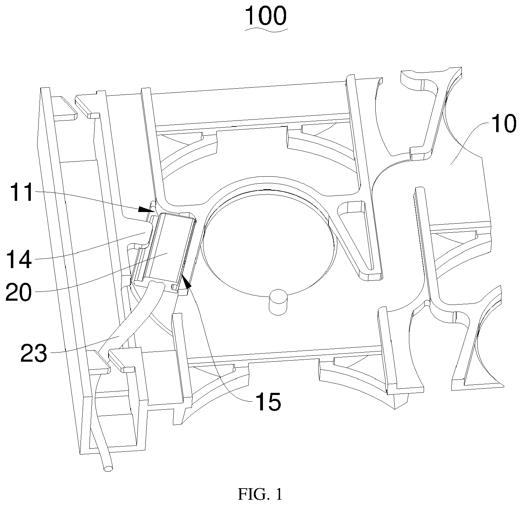

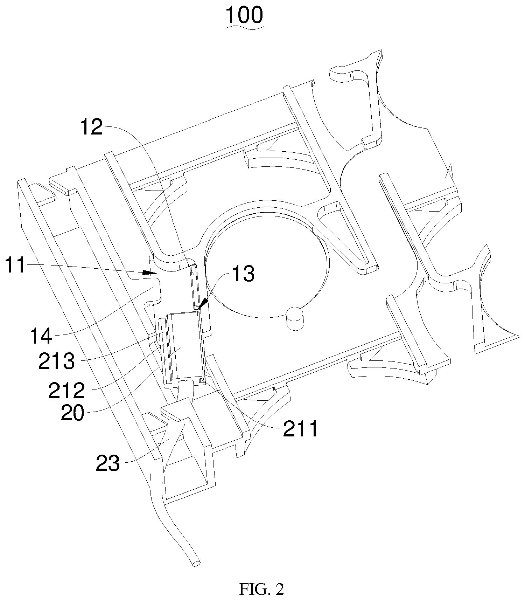

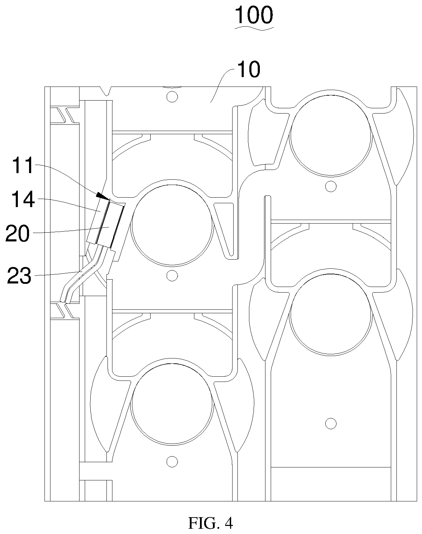

As shown in FIGs. 1 to 3, the present embodiment provides a cells contact system (CCS) assembly 100. The CCS assembly 100 is disposed on a top of a battery group and includes a plastic bracket 10, a temperature obtaining member 20, and a connection portion 30 (as shown in FIG. 4).

The plastic bracket 10 is defines a through groove 11. The temperature obtaining member 20 is received in the through groove 11. The temperature obtaining member 20 includes a temperature sensor 22 and an encapsulation member 21 that sleeves an outside of the temperature sensor 22. The temperature sensor 22 is configured to collect a temperature of the battery group. The encapsulation member 21 has a connecting surface 213 connected to the plastic bracket 10. The connection portion 30 is configured to connect the connecting surface 213 with the plastic bracket 10, such that the plastic bracket 10 prevents the temperature obtaining member 20 from detaching from the plastic bracket 10 in an axial direction of the battery group.

For the above CCS assembly 100, the plastic bracket 10 defines the through groove 11, the encapsulation member 21 sleeves the outside of the temperature sensor 22 to form the temperature obtaining member 20, and the encapsulation member 21 has the connecting surface 213 connected to the plastic bracket 10. While the temperature obtaining member 20 is being mounted with the plastic bracket 10, the connection portion 30 is disposed and connected between the connecting surface 213 and the plastic bracket 10, such that a contact area between the encapsulation member 21 and the plastic bracket 10 is larger, and that is, a larger connection area is achieved. In this way, connection between the temperature obtaining member 20 and the plastic bracket 10 is more stable. In addition, the plastic bracket 10 prevents the temperature obtaining member 20 from being detached along the axial direction of the battery group, such that the temperature sensor 22 is prevented from detaching from the plastic bracket 10, and therefore, the temperature detected by the temperature sensor 22 may not be jumping abnormally.

Specifically, the connection portion 30 of the present embodiment is a structural adhesive. After the CCS assembly 100 is mounted to the top of the battery group, the structural adhesive is filled into the CCS assembly 100. The structural adhesive may flow to reach a space between the encapsulation member 21 and the plastic bracket. After the structural adhesive solidifies, the structural adhesive is disposed and connects between the encapsulation member 21 and the plastic bracket 10. In addition, the structural adhesive may further penetrate to reach a space between the CCS assembly 100 and the top of the battery. In this way, the structural adhesive allows the CCS assembly 100 to be connected to the battery group to form a one-piece and integral structure. Therefore, a position of the temperature obtaining member 20 is fixed, and the temperature obtaining member 20 is avoided from sliding relative to the plastic bracket 10.

Understandably, since the encapsulation member 21 encapsulates the outside of the temperature sensor 22, the temperature sensor 22 is isolated and protected from water. In addition, since the temperature sensor 22 needs to collect the temperature of the battery group accurately and in real time, the encapsulation member 21 in the present embodiment has a certain thermal conductivity allowing heat generated within the battery group to be transferred to the temperature sensor 22, such that the temperature sensor 22 may monitor the temperature in real time.

While forming the connecting surface 213 on the encapsulation member 21, in the present embodiment, a pressing block 14 is arranged on at least one side groove wall of the through groove 11, and a protrusion 212 is arranged on at least one side wall of the encapsulation member 21. The protrusion 212 has the connecting surface 213. Along the axial direction of the battery group, the protrusion 212 is located below the pressing block 14. For example, the protrusion 212 is received in the through groove 11 and is located between the pressing block 14 and a bottom wall of the through groove 11. The connection portion 30 is configured to connect the protrusion 212 with the pressing block 14. For example, when filling the connecting adhesive to serve as the connection portion 30, the connecting adhesive is formed between the protrusion 212 and the pressing block 14. In this way, limiting the position of the temperature obtaining member 20 is achieved by the protrusion 212 connecting with the pressing block 14.

Specifically, the pressing block 14 is arranged on one groove wall of the through groove 11, and a guide 12 is arranged on another groove wall of the through groove 11. The protrusion 212 is arranged on one side wall of the encapsulation member 21, and a slide groove 211 is defined in another side wall of the encapsulation member 21. The guide 12 is received in the slide groove 211, such that the guide 12 is slidably connected with the slide groove 211. An extension direction of the guide 12 is parallel to a plane in which the top (such as a top surface) of the battery group is located. In this way, the temperature obtaining member 20 may be mounted to a predetermined position in the through groove 11 by sliding along the guide 12 due to the slidable connection between the guide 12 and the slide groove 211. Further, since the guide 12 is arranged on the plastic bracket 10 and the slide groove 211 is defined in the encapsulation member 21, the guide 12 and the slide groove 211 may be formed easily. In addition, when the temperature obtaining member 20 is inserted into the through groove 11, only one side of the temperature obtaining member 20 having the slide groove 211 needs to be aligned with the guide 12, and the other side of the temperature obtaining member 20 is not restricted by the guide 12. In this way, more space is available while the temperature obtaining member 20 is being inserted, such that a mounting efficiency is improved. Furthermore, when the connection portion filled within the battery group and between the battery group and the CCS assembly 100 is expanding and deformed to drive the temperature obtaining member 20 to move in the axial direction of the battery group, the pressing block 14 may press the protrusion 212 to prevent the temperature obtaining member 20 from moving excessively, such that the temperature collected by the temperature obtaining member 20 may not be affected or jumping. In other embodiments, the guide 12 may be arranged on the side wall of the encapsulation member 21, and the slide groove 211 may be defined in the groove wall of the through groove 11, according to demands. In this case, the slidable connection between the encapsulation member 21 and the plastic bracket 10 may also be achieved.

Further, since a size of the temperature obtaining member 20 is small and a size of the through groove 11 is small, a side of the guide 12 facing towards an inlet of the through groove 11 defines a notch 13, such that a length of the guide 12 is less than a length of the slide groove 211, and therefore, the entire temperature obtaining member 20 may be received in the through groove 11 easily. In this way, while the temperature obtaining member 20 is being inserted into the through groove 11, a larger space is available at the inlet of the through groove 11, and the guide 12 may slide to be received into the slide groove 211 of the encapsulation member 21 of the temperature obtaining member 20 easily.

Further, in order to facilitate production of the plastic bracket 10, a length of the pressing block 14 is less than a length of the protrusion 212 along a mounting direction of the temperature obtaining member 20. Due to the smaller length of the pressing block 14, the plastic bracket 10 may be formed easily. The pressing block 14 may be located on a top of the protrusion 212, as long as the position of the temperature obtaining member 20 is limited.

In addition, along the mounting direction of the temperature obtaining member 20, the pressing block 14 of the present embodiment is disposed at a middle portion of the through groove 11. That is, the encapsulation member 21 has a first end portion near the inlet of the through groove 11, a second end portion away from the inlet of the through groove 11, and a middle portion disposed between the first end portion and the second end portion. The pressing block 14 is disposed corresponding to the middle portion. In this way, the pressing block 14 may be easily formed on the plastic bracket 10 and may not be obstructed by any other structure of the plastic bracket 10.

For the protrusion 212 in the present embodiment, a bottom wall of the protrusion 212 and a bottom wall of the encapsulation member 21 are co-planar. In other embodiments, the protrusion 212 may be disposed at a middle of the side wall of the encapsulation member 21.

Further, after the CCS assembly 100 is disposed on the top of the battery group, the structural adhesive may be poured to allow the structural adhesive, the CCS assembly 100, and the battery group to form a one-piece and integral structure. A gap 15 is defined between each of two opposite side walls of the encapsulation member 21 and the wall of the through groove 11. Therefore, the structural adhesive, when being poured, may flow into the space between the CCS assembly 100 and the battery group through the gap 15, such that the CCS assembly 100 and the battery group form the one-piece and integral structure.

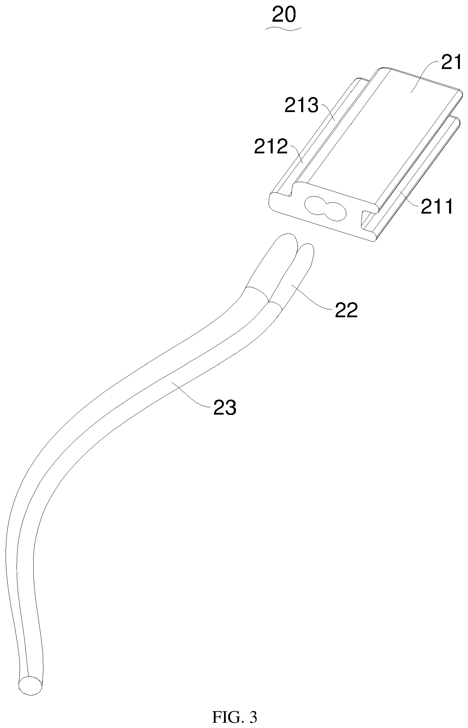

FIG. 3 shows a schematic view of the temperature obtaining member of the present embodiment. The temperature sensor 22 of the present embodiment is a temperature sensor having a droplet-shaped head, i.e., the outer surface of the temperature sensor 22 is curved. The temperature sensor having the droplet-shaped head is encapsulated inside the encapsulation member 21. The temperature obtaining member 20 further includes a wire harness 23 connected to the temperature sensor having the droplet-shaped head. A position of the wire harness 23 is limited by a block of the plastic bracket 10.

For the above-described CCS assembly 100, the guide 12 is arranged on the plastic bracket 10, and the slide groove 211 is defined in the encapsulation member 21. By engaging the guide 12 with the slide groove 211, the entire temperature obtaining member 20 may move only along a direction parallel to the plane on which the top of the battery group is located. The plastic bracket 10 prevents the temperature obtaining member 20 from being detached along the axial direction of the battery group, such that the temperature sensor 22 is prevented from being detached from the plastic bracket 10, and the temperature detected by the temperature sensor 22 may not jump abnormally. In addition, when the temperature sensor 22 and the plastic bracket 10 are fixed with each other by the back adhesive, an operation of tearing the back adhesive to adhere to the battery group may be avoided. A risk of the temperature sensor 22 being detached, due to aging of the back adhesive, from the plastic bracket 10 may be avoided. Furthermore, a risk of the wiring harness 23 connected to the temperature sensor 22 peeling off the adhesive may be avoided. The mounting efficiency may be improved, and labor costs for mounting may be reduced.

### Embodiment 2

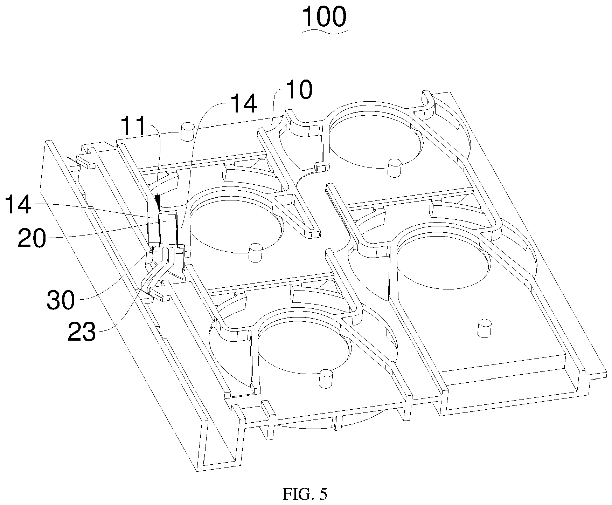

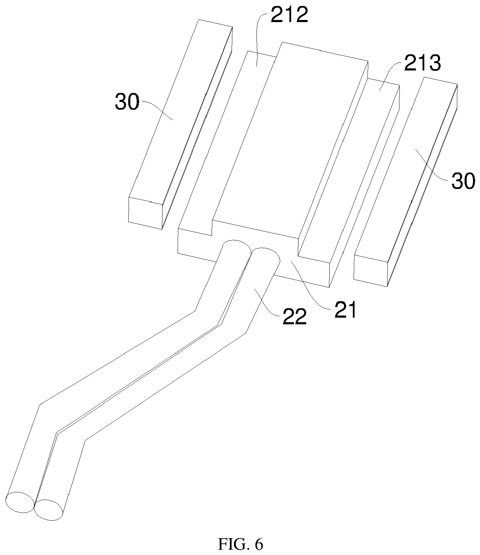

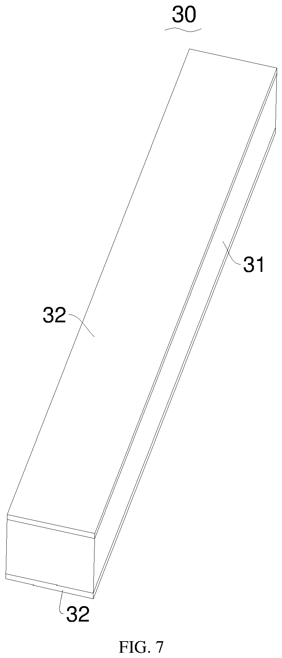

As shown in FIGS. 4 to 7, a CCS assembly 100 is provided. The CCS assembly 100 of the present embodiment is substantially the same as the CCS assembly 100 of the first embodiment. Differences there between include the following. The connection portion 30 of the present embodiment includes a compressible layer 31 and two adhesive layers 32 respectively disposed on two opposite sides of the compressible layer 31. One of the two adhesive layers 32 is connected to the connecting surface 213, and the other one of the two adhesive layers 32 is connected to the bracket 10. In this case, the connection portion 30 is directly connected between the encapsulation member 21 and the bracket 10. Since the connection portion 30 includes the compressible layer 31 and the compressible layer 31 can be compressed, a thickness of the entire connection portion 30 is greater than a distance between the bracket 10 and the temperature obtaining member 20 while the temperature obtaining member 20 is being mounted with the bracket 10. Specifically, the protrusion 212 has a connecting surface 213 facing the pressing block 14. The pressing block 14 has a block connecting surface facing the protrusion 212. The entire connection portion 30 is disposed between the the connecting surface 213 of the protrusion 212 and the block connecting surface. A first adhesive layer 32 of the connection portion 30 is arranged on the connecting surface 213 of the protrusion 212, and the second adhesive layer 32 is arranged on the block connecting surface. The thickness of the entire connection portion 30 refers to a distance from an outer surface of the first adhesive layer 32 to an outer surface of the second adhesive layer 32. The distance between the holder 10 and the temperature obtaining member 20 is a distance from the connecting surface 213 of the protrusion 212 to the block connecting surface. When the temperature obtaining member 20 and the bracket 10 are being mounted, the compressible layer 31 is compressed, such that the encapsulation member 21 may abut against and applies a force to an upper surface of the battery group, allowing the temperature of the battery group to be collected.

In order to ensure the connection between the temperature obtaining member 20 and the bracket 10 to be stable, two protrusions 212 are respectively arranged on two opposite sides of the encapsulation member 21, two pressing blocks 14 are respectively arranged on two opposite side walls of the through groove 11. The two protrusions 212 are connected to the two pressing blocks 14 in one-to-one correspondence through the connection portion 30.

Specifically, the compressible layer 31 of the present embodiment is a compressible and insulating material, such as foam, sponge, and the like.

### Embodiment 3

The present embodiment provides a battery module including a battery group 200 and the CCS assembly 100 as described above.

The CCS assembly 100 is disposed at the top of the battery group 200 along the axial direction of the battery group 200 and is electrically connected to the battery group 200 to collect voltage signals and current signals of the battery group 200.

Furthermore, after the CCS assembly 100 is arranged on the top of the battery group 200 and electrically connected to the battery group 200, based on the structure of the CCS assembly 100 of the first embodiment, the structural adhesive is poured to the CCS assembly 100 to enable the CSS assembly and the battery group to form the one-piece and integral structure.

The technical solutions disclosed in the present disclosure are not limited to those disclosed in the above embodiments but further include technical solutions composed of any combination of the above technical features. It should be noted that, any ordinary skilled person in the art may perform improvements and embellishments on the present disclosure without departing from the principle of the present disclosure, and the improvements and embellishments shall fall within the scope of the present disclosure.

## Claims

1. A cells contact system (CCS) assembly, arranged on a top of a battery group (200), the CCS assembly **characterized by** comprising:
a plastic bracket (10), defining a through groove;
a temperature obtaining member (20), received in the through groove (11) and comprising a temperature sensor (22) and an encapsulation member (21) sleeving an outside of the temperature sensor (22), wherein the temperature sensor (22) is configured to obtain a temperature of the battery group (200), the encapsulation member (21) has a connecting surface (213) connected to the plastic bracket (10);
a connection portion (30), configured to connect the connecting surface (213) to the plastic bracket (10) and abutting against the temperature obtaining member (20), wherein the plastic bracket (10) and the connection portion (30) cooperatively prevents the temperature obtaining member (20) from detaching from the plastic bracket (10) in an axial direction of the battery group (200).

2. The CCS assembly according to claim 1, wherein, a pressing block (14) is arranged on at least one side groove wall of the through groove (11), a protrusion (212) is arranged on at least one side wall of the encapsulation member (21), the protrusion (212) has the connecting surface (213), the protrusion (212) is disposed below the pressing block (14) along the axial direction of the battery group (200), the connection portion (30) connects the protrusion (212) to the pressing block (14).

3. The CCS assembly according to claim 2, wherein the at least one side groove wall of the through groove (11) comprises two side groove walls, the pressing block (14) is arranged on one of the two side groove walls, a guide (12) is arranged on the other one of the two side groove walls;
the at least one side wall of the encapsulation member (21) comprises two side walls, the protrusion (212) is arranged on one of the two side walls, a slide groove (211) is defined in the other one of the two side walls;
the guide (12) is slidably connected with the slide groove (211).

4. The CCS assembly according to claim 3, wherein a side of the guide (12) facing towards an inlet of the through groove (11) has a notch, a length of the guide (12) is less than a length of the slide groove (211).

5. The CCS assembly according to claim 3, wherein a length of the pressing block (14) is less than a length of the protrusion (212) along a direction of the temperature obtaining member (20) being mounted.

6. The CCS assembly according to claim 5, wherein the pressing block (14) is disposed at a middle of the through groove (11) along the direction of the temperature obtaining member (20) being mounted.

7. The CCS assembly according to any one of claims 2 to 6, wherein a bottom wall of the protrusion (212) and a bottom wall of the encapsulation member (21) are co-planar.

8. The CCS assembly according to any one of claims 1 to 6, wherein each of two opposite side walls of the encapsulation member (21) is spaced apart from a corresponding groove wall of the through groove.

9. The CCS assembly according to claim 2, wherein the connection portion (30) comprises a compressible layer (31) and two adhesive layers (32) respectively disposed on two opposite sides of the compressible layer (31), one of the two adhesive layers (32) is connected to the connecting surface (213), and the other one of the two adhesive layers (32) is connected to the plastic bracket (10).

10. A battery module, comprising:
a battery group (200), and
the cells contact system (CCS) assembly according to any one of the claims 1 to 9, arranged on a top of the battery group (200).
